# FASCICULE DE BREVET EUROPEEN

(11) **EP 2 245 085 B1**
(45) Date de publication et mention de la délivrance du brevet: **25.04.2012**
(21) Numéro de dépôt: 09713118.9
(22) Date de dépôt: 13.02.2009
(51) Int. Cl.: C08J 3/20, C08J 3/22, C08K 5/00, C08K 5/13, C08K 5/18, H01B 17/50

(54) **PROCÉDÉ DE FABRICATION D'UN ISOLATEUR ÉLECTRIQUE AVEC UN REVÊTEMENT POLYMÈRE CONTENANT DES AGENTS ANTI-OZONANTS**
VERFAHREN ZUR HERSTELLUNG EINES ELEKTRISCHEN ISOLATORS MIT EINER POLYMERBESCHICHTUNG MIT OZONSCHUTZMITTELN
METHOD FOR MAKING AN ELECTRIC INSULATOR WITH A POLYMER COATING CONTAINING ANTIOZONANT AGENTS

(30) Priorité: 20.02.2008 US 30059
(43) Date de publication de la demande: 03.11.2010
(73) Titulaire: Sediver Société Europeenne d'Isolateurs en Verre et Composite, 92017 Nanterre (FR)
(72) Inventeur: THEVENET, Guy, F-63310 Beaumont Les Randan (FR)
(74) Mandataire: Prugneau, Philippe
(86) Numéro de dépôt international: PCT/FR2009/050234
(87) Numéro de publication internationale: WO 2009/103923

(56) Documents cités:
- WO-A1-01/34680
- US-A1- 2005 209 384
- DATABASE WPI Week 199711 Thomson Scientific, London, GB; AN 1997-114111 XP002584631 & JP 9 001697 A (CANON KK) 7 janvier 1997 (1997-01-07)
- DATABASE WPI Week 198744 Thomson Scientific, London, GB; AN 1987-312536 XP002584632 & SU 1 291 591 A1 (DNEPR RUBBER IND) 23 février 1987 (1987-02-23)

## Description

L'invention concerne un procédé de fabrication d'un isolateur composite avec un revêtement protecteur réalisé en un matériau polymère incorporant un antiozonant et un antioxydant.

Le revêtement des isolateurs électriques en matériau composite utilisés soit comme isolateurs de ligne ou de poste, soit pour d'autres équipements électriques est généralement réalisé en matériaux polymères ou élastomères tels que le silicone, l'EPDM (Ethylène Propylène Diène Monomère), l'EPM (Ethylène Propylène Monomère) ou d'autres matériaux adaptés. Par souci de simplification, ces matériaux polymères ou élastomères seront appelées par la suite « matériau polymère ».

Un tel isolateur est utilisé dans les réseaux électriques ou les appareils à tension élevée. Il est plus particulièrement prévu pour être installé en plein air où il est soumis aux agressions du milieu environnant. Dans certaines conditions environnementales, la surface du revêtement en matériaux polymères évolue et affecte les performances de l'isolateur.

Des analyses effectuées d'une part sur des isolateurs en retour de ligne et d'autre part en laboratoire sur des échantillons de matériaux polymères soumis à une activité électrique mettent en évidence une attaque par l'ozone et une attaque par l'acide nitrique de la surface du revêtement en matériaux polymères qui provoquent cette évolution.

Cette évolution de la surface du revêtement est une conséquence directe de l'activité électrique de surface dans des conditions extérieures propices : l'ozone est généré par une décharge électrique dans l'air environnant, sa réaction avec l'azote, l'oxygène et l'humidité de l'air conduit à la formation d'acide nitrique.

Le document WO-91/06106 présente un isolateur composite qui peut être recouvert d'un revêtement de protection contre les effets de l'environnement, dont l'attaque par l'ozone.

On connaît du document US-4638026 d'utiliser des agents antioxydants de la famille des antioxydants phénoliques et des agents antiozonants de la famille des phénylènediamines pour stabiliser des matériaux polymères. De tels agents peuvent par exemple être utilisés dans le domaine de l'automobile pour la protection du matériau composant les pneus.

Dans le domaine des isolateurs électriques en matériau composite, on connaît du document US-2005/0209384 une méthode pour traiter un isolateur électrique en recouvrant sa surface d'un revêtement en élastomère silicone afin de le protéger de l'environnement extérieur. Cependant, il n'est pas spécifiquement fait allusion à une protection anti-ozone de la surface du revêtement.

Le but de l'invention est de proposer un procédé de fabrication d'un isolateur électrique qui résiste aux agressions par l'ozone provoquées par l'environnement extérieur.

A cet effet, l'invention a pour objet un procédé de fabrication d'un isolateur composite avec un revêtement protecteur réalisé en un matériau polymère incorporant un antiozonant et un antioxydant, caractérisé en ce qu'il comprend l'étape consistant à incorporer dans ledit matériau polymère ledit antiozonant à une concentration massique finale comprise entre 0,005 % à 1% et ledit antioxydant à une concentration massique finale comprise entre 0,005 % à 1%, ledit antiozonant étant choisi dans la famille des phénylènediamines et ledit antioxydant étant choisi dans la famille des antioxydants phénoliques multifonctionnels.

Avec le procédé selon l'invention, des essais en laboratoire ont montré qu'en intégrant et répartissant un tel additif antioxydant de la famille des antioxydants phénoliques multifonctionnels à une concentration massique finale comprise entre 0,005 % et 1%, ainsi qu'un tel additif antiozonant de la famille des phénylènediamines à une concentration massique finale comprise entre 0,005 % et 1 % dans un matériau polymère, on obtient un effet bénéfique sur la tenue à la dégradation en surface du matériau polymère considéré. Ces concentrations seront désignées par la suite par le terme « concentration optimale ».

La quantité des additifs à incorporer doit être maitrisée notamment pour les antiozonants, une concentration finale élevée (au dessus de 1 %) d'antiozonant incorporé dans un matériau polymère avant vulcanisation nuisant à une vulcanisation totale du matériau polymère, donc à ses performances.

Par exemple, en choisissant du silicone comme matériau polymère, des effets bénéfiques sur la tenue à la dégradation de surface ont été obtenus avec environ 0,05% d'antioxydant et environ 0,1% d'antiozonant incorporés dans le silicone.

L'incorporation des additifs cités dans la masse du matériau polymère composant le revêtement d'un isolateur électrique peut être réalisée suivant différents procédés intervenant avant (premier procédé) ou après (second procédé) la vulcanisation du matériau polymère.

Dans un premier procédé par imprégnation, les pièces à traiter, c'est-à-dire des isolateurs composites recouverts d'un revêtement en matériau polymère, sont plongées pendant une longue durée, par exemple environ 24 heures, dans un solvant (par exemple, du n-hexane) contenant des additifs antioxydants et antiozonants choisis dans les familles mentionnées ci-dessus, dans des concentrations optimales respectives telles que mentionnées ci-dessus. En présence du solvant, le matériau polymère gonfle, ce qui permet une pénétration homogène du solvant et des additifs dans le matériau polymère. Les pièces traitées sont ensuite séchées à l'air libre ou en étuve pour permettre l'évacuation du solvant qui s'était introduit dans le matériau polymère, tout en laissant les additifs dans le matériau polymère. On obtient un isolateur composite recouvert d'un revêtement en matériau polymère contenant des additifs antioxydants et antiozonants répartis de manière homogène dans tout le revêtement.

Dans un second procédé par incorporation, les dits additifs antioxydants et antiozonants sont incorporés à des concentrations respectives optimales dans le matériau polymère au cours de la fabrication et avant la vulcanisation du matériau polymère lui-même.

Pour de faibles concentrations finale d'additifs antioxydants et antiozonants, par exemple 0,05%, il peut être difficile d'obtenir une répartition ou dispersion homogène desdits additifs dans la matrice du matériau polymère et la durée nécessaire pour obtenir un mélange est importante.

Pour assurer une dispersion homogène des dits additifs dans tout le matériau polymère, même à des concentrations finales faibles d'additifs, une variante du second procédé par incorporation peut être utilisée. Dans cette variante, on réalise un « master batch » ou mélange maître du matériau polymère qui a la même composition que le matériau polymère final auquel on ajoute des additifs antioxydants et antiozonants à une concentration supérieure à la concentration finale optimale. Le mélange maître peut ensuite être incorporé au matériau polymère pendant la fabrication de celui-ci, dans des proportions permettant de respecter les concentrations optimales respectives des additifs antioxydants et antiozonants. Cette variante du second procédé par incorporation permet d'obtenir un matériau polymère avec une dispersion homogène des dits additifs dans la matrice du matériau polymère.

En particulier, on peut choisir une concentration des additifs antioxydants et antiozonants dans le mélange maître 10 fois supérieure à la concentration finale optimale. Dans ce cas, les composants du matériau polymère sont incorporés à hauteur de 90% et le mélange maître à hauteur de 10%.

## Revendications

1. Procédé de fabrication d'un isolateur composite avec un revêtement protecteur réalisé en un matériau polymère incorporant un antiozonant et un antioxydant, **caractérisé en ce qu'**il comprend l'étape consistant à incorporer dans ledit matériau polymère ledit antiozonant à une concentration massique finale comprise entre 0,005 % à 1% et ledit antioxydant à une concentration massique finale comprise entre 0,005 % à 1%, ledit antiozonant étant choisi dans la famille des phénylènediamines et ledit antioxydant étant choisi dans la famille des antioxydants phénoliques multifonctionnels.

2. Procédé de fabrication d'un isolateur composite selon la revendication 1, dans lequel ledit matériau polymère est du silicone, ledit antiozonant est incorporé à une concentration massique de 0,1% et ledit antioxydant à une concentration massique de 0,05%.

3. Procédé de fabrication d'un isolateur composite selon la revendication 1 ou 2, dans lequel l'étape d'incorporation consiste à plonger pendant 24 heures ledit isolateur composite avec ledit revêtement dans un solvant contenant ledit antioxydant et ledit antiozonant.

4. Procédé de fabrication d'un isolateur composite selon la revendication 1 ou 2, dans lequel l'étape d'incorporation est réalisée avant vulcanisation dudit matériau polymère.

5. Procédé de fabrication d'un isolateur composite selon la revendication 4, dans lequel l'étape d'incorporation comprend la réalisation d'un premier mélange de matériau polymère avec ledit antioxydant et ledit antiozonant à des concentrations massiques respectives supérieures à ladite concentration finale, puis l'incorporation du premier mélange à du matériau polymère pour obtenir ledit matériau polymère dudit revêtement incorporant ledit antioxydant et ledit antiozonant.

6. Procédé de fabrication d'un isolateur composite selon la revendication 5, dans lequel ladite concentration massique supérieure à ladite concentration finale est 10 fois la concentration finale desdits antioxydant et antiozonant dans le matériau polymère dudit revêtement.

## Claims

1. A method of fabricating a composite insulator with a protective housing made of a polymer material incorporating an antioxidant and an antiozonant, the method being **characterized in that** it includes the step consisting in incorporating in said polymer material said antiozonant at a final concentration by weight lying in the range 0.005% to 1%, and said antioxidant at a final concentration by weight lying in the range 0.005% to 1%, said antiozonant being selected from the family of phenylenediamines, and said antioxidant being selected from the family of multifunctional phenolic antioxidants.

2. A method of fabricating a composite insulator according to claim 1, wherein said polymer material is silicone, said antiozonant is incorporated at a concentration by weight of about 0.1 %, and said antioxidant at a concentration by weight of about 0.05%.

3. A method of fabricating a composite insulator according to claim 1 or claim 2, wherein the incorporation step consists in immersing said composite insulator together with said housing in a solvent containing said antioxidant and said antiozonant for a period of about 24 hours.

4. A method of fabricating a composite insulator according to claim 1 or claim 2, wherein the incorporation step is performed prior to vulcanizing said polymer material.

5. A method of fabricating a composite insulator according to claim 4, wherein the incorporation step comprises making a first batch of polymer material with said antioxidant and said antiozonant at respective concentrations by weight higher than said final concentration, and then incorporating the first batch in the polymer material in order to obtain said polymer material for said housing incorporating said antioxidant and said antiozonant.

6. A method of fabricating a composite insulator according to claim 5, wherein said concentration by weight is higher than said final concentration and is about ten times the final concentration of said antioxidant and said antiozonant in the polymer material of said housing.

## Patentansprüche

1. Verfahren zur Herstellung eines Verbundstoffisolators mit einer Schutzbeschichtung, die aus einem Polymerwerkstoff gefertigt ist, in welchen ein Ozonschutzmittel und ein Antioxidans eingearbeitet sind, **dadurch gekennzeichnet, dass** es den Schritt umfasst, der darin besteht, das Ozonschutzmittel in einer Endkonzentration im Bereich von 0,005 bis 1 Gewichts-% und das Antioxidans in einer Endkonzentration im Bereich von 0,005 bis 1 Gewichts-% in den Polymerwerkstoff einzuarbeiten, wobei das Ozonschutzmittel aus der Familie der Phenylendiamine ausgewählt ist und das Antioxidans aus der Familie der phenolischen, multifunktionellen Antioxidantien ausgewählt ist.

2. Verfahren zur Herstellung eines Verbundstoffisolators nach Anspruch 1, wobei es sich bei dem Polymerwerkstoff um Silikon handelt, wobei das Ozonschutzmittel in einer Konzentration von 0,1 Gewichts-% eingearbeitet wird und das Antioxidans in einer Konzentration von 0,05 Gewichts-%.

3. Verfahren zur Herstellung eines Verbundstoffisolators nach Anspruch 1 oder 2, wobei der Einarbeitungsschritt darin besteht, den Verbundstoffisolator mit der Beschichtung 24 Stunden lang in ein Lösungsmittel einzutauchen, welches das Antioxidans und das Ozonschutzmittel enthält.

4. Verfahren zur Herstellung eines Verbundstoffisolators nach Anspruch 1 oder 2, wobei der Einarbeitungsschritt vor der Vulkanisation des Polymerwerkstoffs durchgeführt wird.

5. Verfahren zur Herstellung eines Verbundstoffisolators nach Anspruch 4, wobei der Einarbeitungsschritt die Herstellung einer ersten Mischung aus Polymerwerkstoff mit dem Antioxidans und dem Ozonschutzmittel in gewichtsbezogenen Konzentrationen umfasst, die jeweils höher als die Endkonzentration sind, woraufhin die erste Mischung in Polymerwerkstoff eingearbeitet wird, um den Polymerwerkstoff der Beschichtung zu erhalten, in welchen das Antioxidans und das Ozonschutzmittel eingearbeitet sind.

6. Verfahren zur Herstellung eines Verbundstoffisolators nach Anspruch 5, wobei die gewichtsbezogene Konzentration, die höher als die Endkonzentration ist, dem 10-fachen der Endkonzentration des Antioxidans und des Ozonschutzmittels in dem Polymerwerkstoff der Beschichtung entspricht.
